# EUROPÄISCHE PATENTSCHRIFT

(11) **EP 1 844 566 B1**
(45) Veröffentlichungstag und Bekanntmachung des Hinweises auf die Patenterteilung: **15.12.2010**
(21) Anmeldenummer: 06707832.9
(22) Anmeldetag: 25.01.2006
(51) Int. Cl.: H04J 14/06, H04J 14/02

(54) **VERFAHREN ZUR OPTISCHEN ÜBERTRAGUNG VON POLARISATIONS-MULTIPLEXSIGNALEN**
METHOD FOR OPTICALLY TRANSMITTING POLARISATION MULTIPLEX SIGNALS
PROCEDE DE TRANSMISSION OPTIQUE DE SIGNAUX MULTIPLEX DE POLARISATION

(30) Priorität: 26.01.2005 DE 102005003681; 26.01.2005 DE 102005003679
(43) Veröffentlichungstag der Anmeldung: 17.10.2007
(73) Patentinhaber: Nokia Siemens Networks GmbH & Co. KG, 81541 München (DE)
(72) Erfinder: HECKER, Nancy, A-6020 Innsbruck (AT); PAETSCH, Werner, 81479 München (DE); VAN DEN BORNE, Dirk, NL-5531 BN Bladel (NL)
(86) Internationale Anmeldenummer: PCT/EP2006/050429
(87) Internationale Veröffentlichungsnummer: WO 2006/079634

(56) Entgegenhaltungen:
- WO-A-00/72492
- WO-A-2004/028046
- US-A1- 2002 067 883
- US-A1- 2002 186 435
- US-A1- 2003 090 768
- HASHIZUME Y ET AL: "50 GHZ-SPACED 64 CHANNEL INTEGRATED POLARIZATION-INTERLEAVE-MULTIPLE XER ON SILICA-BASED PLANAR LIGHTWAVE CIRCUIT" TECHNICAL DIGEST. OPTOELECTRONICS AND COMMUNICATIONS CONFERENCE. PROCEEDINGS OF OECC, Bd. 1, 8. Juli 2002 (2002-07-08), Seiten 452-453, XP009039145

## Beschreibung

Die Erfindung betrifft Verfahren zur Übertragung von zu einem Wellenlängen-Multiplexsignal zusammengefassten Polarisations-Multiplexsignalen nach den Oberbegriffen der Patentansprüche 1 und 5.

Die Übertragung von Daten in Übertragungssystemen mit Multiplextechnik erlaubt für eine Vielzahl von Teilnehmern die gleichzeitige Nutzung eines Übertragungsmediums, wodurch die Übertragungskapazität wesentlich erweitert wird. Beim optischen Wellenlängen-Multiplexverfahren (engl. "wavelength division multiplexing", abgekürzt WDM) werden N modulierte optische Signale im NRZ-Format (im Folgenden auch als Datensignale bezeichnet) mit den Mittenwellenlängen (Trägerwellenlängen) λ₁, ..., λ_{N} durch einen Wellenlängenmultiplexer zu einem breitbandigen optischen WDM-Signal zusammengefasst und in N Kanälen übertragen. Das WDM-Signal ist somit ein Summensignal bestehend aus den Datensignalen der N Signale. Als Kanal wird ein für die Übertragung eines Datensignals genutzter Wellenlängenbereich respektive Frequenzbereich bezeichnet.

Zur Verdopplung der Übertragungskapazität in einem vorgegebenen optischen Übertragungskanal wird das Polarisations-Multiplexverfahren angewendet. Beim Polarisations- Multiplexverfahren (engl. "polarization multiplexing", abgekürzt POLMUX) werden in einem optischen Kanal zwei zueinander orthogonal polarisierte Datensignale bei einer Mittenwellenlänge übertragen. Das daraus resultierende Signal wird als Polarisations-Multiplexsignal oder kurz POLMUX-Signal bezeichnet. Dadurch wird die Übertragungskapazität eines einzelnen Übertragungskanals verdoppelt. In einer älteren Anmeldung mit der Veröffentlichungsnummer DE 10 2004 005718 A1 ist ein vorteilhaftes Verfahren zur POLMUX-Übertragung beschrieben.

Durch die Kombination beider Übertragungstechnike (siehe US 2002/186435) wurden Datenraten von mehr als 10 Tbit/s über eine Distanz von über 300 km erreicht (Y. Frignac et al.,"Transmission of 256 WDM and polarization-division-multiplexed channels at 42,7 Gb/s (10,2 Tb/s capacity) over 300 km of TeraLight™ fiber", in Proc. OFC 2002, Paper FC5).

Allerdings werden die Reichweiten der Datenübertragung in Übertragungssystemen mit Polarisations-Multiplex durch nichtlineare Störeffekte stark eingeschränkt. Es handelt sich dabei im Wesentlichen um Polarisationsmoden-Dispersion (PMD) und um nichtlineare bitmusterabhängige Übersprecheffekte. Während aus WDM-Systemen ohne POLMUX bitmusterabhängiges Übersprechen aufgrund von Stimulierter Raman-Streuung (SRS), Kreuzphasenmodulation (XPM) und Vier-Wellen-Mischung (FWM) bekannt ist, so tritt in Systemen mit POLMUX überwiegend ein polarisationsabhängiges Übersprechen auf.

Der Polarisationszustand einer transversalen elektromagnetischen Welle ist durch die Vektor-komponenten der Amplitude des elektrischen Feldes bezogen auf eine beliebiges aber festes rechtwinkliges Koordinatensystem und die relative Phase zwischen den Vektorkomponenten des elektrischen Feldes gegeben. Daher bewirkt eine Änderung der relativen Phase zwischen den Komponenten eine Änderung des Polarisationszustands der optischen Welle. In Vielkanalsystemen verursachen demzufolge nichtlineare Effekte, die eine Änderung der relativen Phase hervorrufen, auch eine wechselseitige Änderung des Polarisationszustandes der optischen Signale. So bewirkt die vom Polarisationszustand und der Intensität der beteiligten Signale abhängige Kreuzphasenmodulation (XPM) im Allgemeinen eine Änderung der relativen Phase und damit eine Änderung des Polarisationszustandes. Deren zeitlicher Verlauf hängt von der übertragenen Bitsequenz der kopropagierenden Kanäle ab. In einem Kanal eines WDM-Systems mit POLMUX ändert sich durch stets wechselnde Bitsequenzen der zueinander orthogonal polarisierten Datensignale in einem POLMUX-Signal die resultierende Polarisation als Funktion der Zeit. Stimmen die Polarisationszustände der Resultierenden für zwei oder mehrere Kanäle in einem Zeitintervall überein (beispielsweise wenn in allen betrachteten Kanälen in beiden Polarisationen die gleiche Bit-Kombination übertragen wird), so bewirkt durch XPM die Intensität in einem Kanal eine Polarisationsänderung in allen anderen Kanälen. Dieses führt wegen der stets wechselnden Bitfolgen zu einer rauschartigen Änderung des Polarisationszustands jedes einzelnen POLMUX-Signals, was einer Depolarisierung gleich kommt. Dieser POLMUX spezifische Depolarisierungseffekt, dessen Ursache in der XPM liegt, wird im Folgenden als Kreuzpolarisationsmodulation (XPolM) bezeichnet. Als Folge von XPolM stehen die Polarisationen der Datensignale, die ursprünglich zueinander orthogonal polarisiert sind, nach der Übertragung nicht mehr senkrecht zueinander und lassen sich im Empfänger nicht eindeutig voneinander trennen. Das durch XPolM bedingte Übersprechen ist grundsätzlich unabhängig von der Datenrate und ist nur geringfügig abhängig vom Kanalabstand. Vielmehr hängt XPolM von der in allen Kanälen geführten Gesamtleistung ab und von der Anzahl der Kanäle. In WDM-Systemen mit POLMUX und einer Vielzahl von Kanälen überwiegt der Einfluss von XPolM im Vergleich zu XPM.

Die durch XPolM bewirkten Störeffekte können durch geringere Gesamtleistungen in den einzelnen Übertragungsstrecken reduziert werden. Dies kann entweder durch Verkürzung der Streckenabschnitte oder durch eine Verkleinerung der Kanalanzahl erreicht werden. Eine andere Möglichkeit zur geringfügigen Reduzierung von XPolM besteht darin, Raman-Verstärker einzusetzen, weil dann die über die Strecke integrierte Leistung geringer ist. Dennoch gilt, dass die Reduzierung der Gesamtleistung in einem WDM-System mit anderen Funktionseinbußen verbunden ist und den Einfluss von XPolM auf die Datenübertragung nur bedingt verringert.

Es wird daher nach neuen Möglichkeiten gesucht, bei der Übertragung von WDM-POLMUX-Signalen die gegenseitigen Störungen zu verringern.

Diese Aufgabe wird durch die in Anspruch 1 und Anspruch 5 beschriebenen Verfahren gelöst.

Zur Verringerung der gegenseitigen Störungen von POLMUX-Signalen in Kanälen eines WDM-Systems ist es vorteilhaft, dass die Polarisations-Multiplexsignale aus jeweils zwei Datensignalen mit einer Phasenverschiebung von 90° gegeneinander gebildet werden.

Die Erfindung beruht auf der Erkenntnis, dass die gegenseitigen Störungen zwischen den POLMUX-Signalen dann am größten sind, wenn in den Kanälen POLMUX-Signale oder optische Datensignale gleicher Polarisation übertragen werden. Die in einem Kanal übertragenen Signale bilden ein resultierendes Signal (resultierenden E-Feld-Vektor), der beispielsweise bei einer linearen Polarisation in einer Ebene liegt und dann besonders störend ist, wenn das gestörte Signal die gleiche Polarisationsebene aufweist. Werden resultierende POLMUX-Signale übertragen die eine resultierende zirkulare Polarisation aufweisen, dann rotieren diese POLMUX-Signale (E-Feld-Vektoren) in benachbarten Kanälen aufgrund der unterschiedlichen Wellenlänge mit unterschiedlichen Geschwindigkeiten, sodass eine Reduktion von einer maximalen auf eine mittlere Störbeeinflussung erfolgt.

Die gegenseitige Beeinflussung wird weiter verringert, wenn benachbarte Kanäle zueinander orthogonale (hier zirkulare) Polarisationen aufweisen.

Nur wenn gleichzeitig beide optische Datensignale in einem POLMUX-Kanal ein aktives Signal aufweisen (in der Regel die logische 1 des binären Datensignals) gibt es ein resultierendes POLMUX-Signal mit einer gegenüber den einzelnen modulierten Datensignalen geänderter Polarisation. Bei der Übertragung von jeweils nur einem aktiven modulierten Datensignal in einem Kanal - das andere modulierte Datensignal entspricht der logischen Null, bei der und das Trägersignal unterdrückt wird - würde es ohne weitere Maßnamen dann zu starker gegenseitiger Beeinflussung kommen, wenn die modulierten Datensignale der übrigen Kanäle die gleiche Polarisation aufweisen. Dies wird in vorteilhafter Weise dadurch vermieden, dass die Polarisationsebenen der modulierten Datensignale in jedem zweiten Kanal um 45° gedreht werden. Hierdurch werden die "worst case" Störungen vermindert. Es kommt zwar zu einer etwas stärkeren gegenseitigen Beeinflussung gegenüber dem optimalen Fall, bei dem die ursprünglichen modulierten Datensignale benachbarter Kanäle orthogonal zueinander polarisiert waren; wichtiger ist jedoch eine Verringerung der Störbeeinflussung bei den Worst-Case-Fällen.

Vorteilhaft ist es ebenfalls, dass in einem ersten Kanal ein erstes optisches Datensignal und ein zweites optisches Datensignal ohne Phasenunterschied ihrer Trägersignale zu einem Polarisations-Multiplexsignal zusammengefasst werden, und dass in einem zweiten Kanal das Trägersignal eines zweiten optischen Datensignals gegenüber dem Trägersignal seines ersten optischen Datensignals um 180° phasenverschoben und mit einem ersten optischen Datensignal zu einem zweiten Polarisations-Multiplexsignal zusammengefasst wird, so dass sich bei gleichzeitiger Aussendung jeweils beider optischer Datensignale eine resultierende Polarisation des zweiten Polarisations-Multiplexsignals des zweiten Kanals um 90° von der resultierenden Polarisation des ersten Polarisations-Multiplexsignals des ersten Kanals unterscheidet.

Besonders gravierend wirken sich Störungen aufgrund von XPolM, aus, wenn in einer großen Anzahl von Kanälen alle optischen Signale die gleiche Polarisation aufweisen und logische 1en übertragen werden. Wenn sich aber die resultierende Polarisation eines Polarisations-Multiplex-Signals eines Kanals um 90° gegenüber dem eines jeweils benachbarten Polarisations-Multiplex-Signals unterscheidet, wird der oben genannte Fall vermieden und die Störung verringert. Dadurch bringt das Verfahren vorteilhaft eine Erhöhung der Übertragungsreichweite mit sich. Bei anderen Bitkombinationen der optischen Signale, für welche die Polarisationen der Datensignale jeweils benachbarter Kanäle orthogonal zueinander sind, ist das nichtlineare Übersprechen ohnehin reduziert.

Ein weiterer Vorteil ergibt sich, wenn die Einstellung der Phasen der modulierten optischen Signale zueinander geregelt wird. Dadurch eröffnet sich die Möglichkeit, die Differenz der resultierenden Polarisation der POLMUX-Signale sendeseitig derart zu regeln, bis sich empfangsseitig beispielsweise bei der Untersuchung der Augendiagramme im Hinblick auf die "Eye opening penalty" (EOP) ein Minimum einstellt und somit eine messbare Verbesserung der Übertragungsqualität eintritt.

Durch Abzweigen eines Regelsignals wird vorteilhaft die Polarisation der POLMUX-Signale gesteuert. Es ergibt sich dadurch eine optimale Störverringerung.

In einer Ausführungsvariante des Verfahrens wird vorteilhaft der Polarisationszustand der POLMUX-Signale während der Datenübertragung an mindestens einer Stelle in der Übertragungsstrecke kontrolliert und geregelt.

Weitere vorteilhafte Weiterbildungen sind in den Unteransprüchen angegeben.

Die Erfindung wird nun anhand von Ausführungsbeispielen näher erläutert:

Es zeigen:
- Figur 1: Polarisation und Phasen eines POLMUX-Signals,
- Figur 2: die Darstellung der Polarisationen auf einer Poincare-Kugel und
- Figur 3: eine prinzipielle Anordnung zur Erzeugung von POLMUX-Signalen mit unterschiedlicher zirkularer und linearer Polarisation,
- Figur 4: eine Skizze zur Verdeutlichung der Polarisation bei einer POLMUX-Übertragung,
- Figur 5: eine Skizze zur prinzipiellen Verdeutlichung eines polarisations-verschachtelten WDM-Systems,
- Figur 6: den Verlauf der Eye Opening Penalty EOP in Abhängigkeit von der Polarisationsdifferenz zwischen den Resultierenden von 5 POLMUX-Signalen,
- Figur 7: das Prinzipschaltbild einer POLMUX-Sendeanordnung mit Regeleinrichtung zur Kontrolle des Polarisationszustands,
- Figur 8: das Prinzipschaltbild einer ersten Variante einer POLMUX-Sendeanordnung,
- Figur 9: das Prinzipschaltbild einer zweiten Variante eines POLMUX-Sendeanordnung.

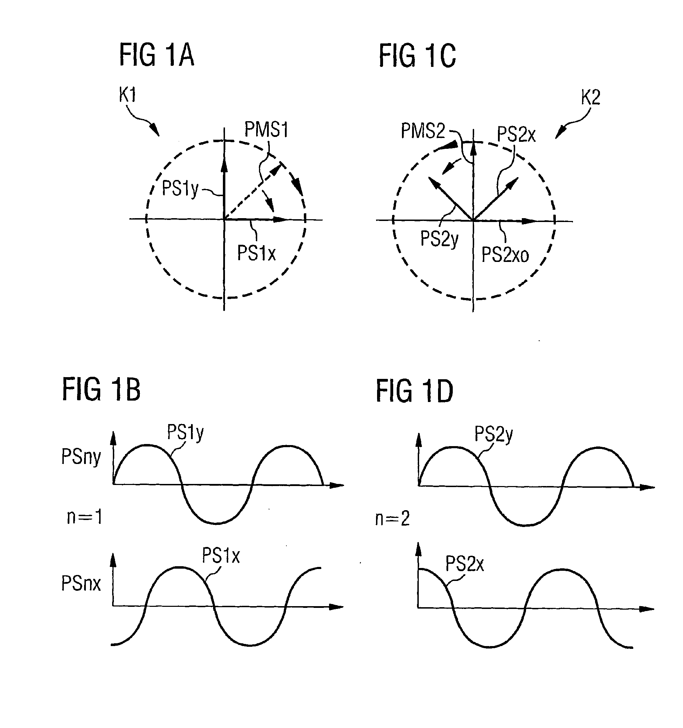

Figur 1 zeigt die Polarisation und Phasenlage zweier POLMUX-Signale in benachbarten POLMUX-Kanälen K1 und K2. Die Erfindung soll anhand zweier benachbarter Kanäle erläutert werden, entsprechendes ergibt sich für weitere Kanäle. Zwei optische mit der logischen 1 modulierte Datensignale PS1x und PS1y werden im ersten POLMUX-Kanal K1 übertragen. Dargestellt sind in einer Momentaufnahme die Amplituden der der E-Feld-Vektoren. Die Übertragungsrichtung in einer Faser ist senkrecht zur Zeichenebene. Das amplitudenmodulierte Datensignal PS1x ist hier waagerecht polarisiert und das amplitudenmodulierte Datensignal PS1y ist senkrecht polarisiert. Beide Signale weisen außerdem zueinander eine Phasenverschiebung zwischen ihren optischen Trägersignalen von ±90° (hier PS1x beispielsweise -90°, Figur 1b) auf, so dass ein resultierendes POLMUX-Signal PMS1 eine rechtszirkulare Polarisation aufweist (gestrichelt). Die POLMUX-Signale in weiteren Kanälen des WDM-Systems sind ebenfalls zirkular polarisiert; da sie jedoch andere Wellenlängen aufweisen, rotieren auch die resultierenden Felder mit unterschiedlichen Drehgeschwindigkeiten, sodass sich eine mittlere Störbeeinflussung ergibt.

In Figur 1c ist das benachbarte bzw. bei einem mehr als zwei POLMUX-Signale aufweisenden Wellenlängen-Multiplexsignal jedes zweite POLMUX-Signal entgegengesetzt zirkular polarisiert. Dies wird erreicht, indem eine gegenüber den modulierten Datensignalen PS1x und PS1y des ersten Kanals entgegengesetzte Phasenverschiebung (hier PA2x +90°, Figur 1d) zwischen beiden modulierten Datensignalen PS2x und PS2y eingestellt wird. Es ergibt sich folglich im zweiten Kanal K2 ein resultierendes POLMUX-Signal PMS2 mit entgegengesetzter linkszirkularer Polarisation. Die resultierenden E-Felder drehen sich somit entgegengesetzt und beeinflussen sich minimal. In einem WDM-System würden zweckmäßigerweise die ungeradzahligen POLMUX-Signale n = 1, 3, 5, ... wie PMS1 polarisiert und alle geradzahligen POLMUX-Signale n = 2, 4, 6, ... wie PMS2 polarisiert.

Ohne weitere Maßnahmen würde aber bei der Übertragung von jeweils nur einem modulierten Datensignal je Kanal, beispielsweise PS1x und PS2x, sich wieder eine maximale gegenseitige Beeinflussung zwischen diesen Signalen ergeben. Durch Drehung der Polarisationsebene der modulierten Datensignale PS2x und PS2y im zweiten Kanal ergibt sich ein Unterschied in der Polarisationsebene zu den modulierten Datensignalen des ersten Kanals von jeweils 45°, wodurch die gegenseitigen Störungen verringert werden.

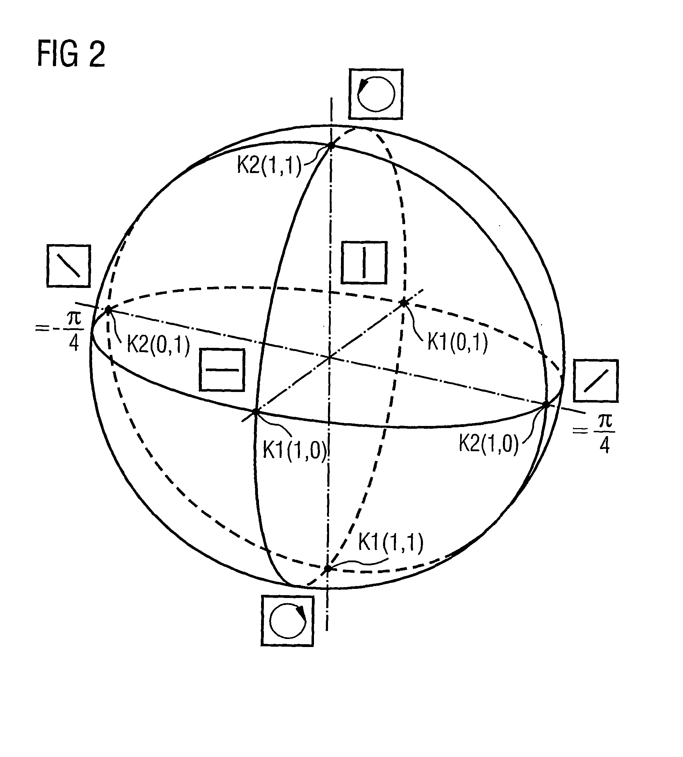

Figur 2 zeigt auf der Poincaré-Kugel die Polarisation der modulierten Datensignale (bzw. bereits ihrer Trägersignale) und die resultierende Polarisation bei Aussendung zweier logischer Einsen im Kanal K1. Wird nur das Signal PS1x (Bits 1,0 im POLMUX-Kanal) übertragen, so weist dieses eine wagerechte Polarisation auf (im Vordergrund); wird nur das modulierte Datensignal PS1y (0,1) übertragen, so weist dies eine senkrechte Polarisation (im Hintergrund der Poincare-Kugel) auf. Diese beiden Signale sind orthogonal zueinander und beeinflussen sich daher gegenseitig nur minimal. Werden beide modulierten Datensignale (1,1) übertragen, so weist das resultierende POLMUX-Signal (1,1) eine rechtszirkulare Polarisation (Südpol) auf. Bei der Übertragung nur eines modulierten optischen Datensignals PS2x oder PS2y (Bits 1,0 oder 0,1) ergibt sich im POLMUX-Kanal K2 ein Polarisationswinkel ϑ = ±45°; auf der Poincaré-Kugel ist der entspricht dies jeweils einer um n/4 (90° bei der traditionellen Gradeinteilung) unterschiedlichen Polarisation gegenüber den einzelnen modulierten Datensignalen PS1x und PS1y des Kanals K1. Werden in beiden Kanälen K1 und K2 jeweils beide modulierten Datensignale (1,1; 1,1) übertragen, dann sind diese zueinander orthogonal zirkular polarisiert. Auch bei Übertragung von zwei modulierten optischen Datensignalen im Kanal K1 und nur einem Datensignal im Kanal K1 ergeben sich unterschiedliche Polarisationen; zwischen beliebigen modulierten Datensignalen der Kanäle K1 und K2 zeigen sich somit zumindest Unterschiede von 90° auf der Poincaré-Kugel. Prinzipiell ist es möglich, gleiche Verhältnisse durch Rotation in beliebiger Richtung auf der Poincaré-Kugel beizubehalten, jedoch ist eine technische Lösung sehr problematisch.

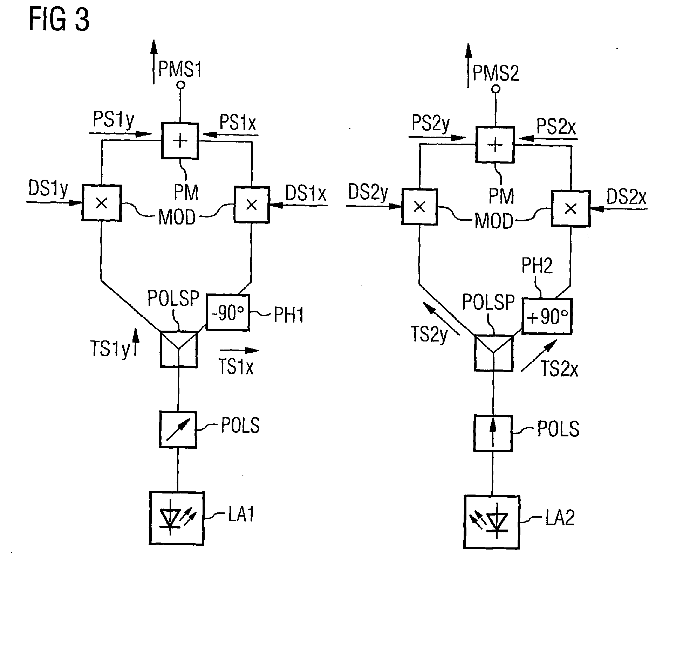

Figur 3 zeigt zwei prinzipielle Anordnungen zur Generierung der gewünschten Signale. Von einem Laser LA1 wird ein linear polarisiertes Signal erzeugt, das (gegebenenfalls durch einen Polarisationssteller POLS) eine Polarisationsebene von 45° aufweist. Dieses Signal wird durch eine Polsplitter POLSP in ein waagerecht polarisiertes Trägersignal TS1x und ein senkrecht polarisiertes Trägersignal TS1y aufgeteilt. Beide Signale werden mit jeweils einem Datensignal DS1x bzw. DS1y moduliert und in einem Polarisations-Multiplexer PM zum POLMUX-Signal PMS1 zusammengefasst. Eine Phasenverschiebung wird durch einen ersten Phasenschieber PH1 erreicht, der hier symbolisch eine Phasenverschiebung des Trägersignals TS1x um -90° bewirkt (gegebenenfalls wird PH in den Signalweg des Signals TS1y eingefügt ist).

Die Erzeugung des zweiten POLMUX-Signals PMS2 erfolgt in entsprechender Weise. Eine zweite Laserdiode LA2 erzeugt ein Signal mit einer anderen Wellenlänge, dessen Polarisation gegebenenfalls in einem Polarisationssteller POLS senkrecht ausgerichtet wird. Der folgende Polarisationssplitter POLSP spaltet das Lasersignal in zwei zueinander orthogonale Trägersignale TS2x und TS2y auf, die gegenüber den Trägersignalen des ersten Kanals jeweils um 45° gedreht sind. Dann werden zwar die Störungen bei der Aussendung nur eines der Datensignale durch Übersprechen nie minimal dafür aber immer reduziert. Bei einer hohen Kanalzahl können die Polarisationen der Datensignale auch um entsprechend kleinere Werte verdreht werden, da sich dann die Störeffekte mitteln. Zusätzliche Drehungen um ein mehrfaches von 90° führen zum gleichen Ergebnis. Diesmal wird das Trägersignal TS2x durch einen zweiten Phasenschieber PH2 gegenüber dem anderen Trägersignal TS2y um +90° phasenverschoben. Beide Trägersignale werden mit Datensignalen DS2x bzw. DS2y moduliert und im Polarisationsmultiplexer PM zum zweiten POLMUX-Signal PMS2 zusammengefasst, das gegenüber dem ersten POLMUX-Signals PMS1 eine entgegengerichtete zirkulare Polarisation aufweist, wenn beide Trägersignale (1,1) übertragen werden. Die Polarisation und gegebenenfalls die Phasenverschiebung werden durch Regelungen konstant gehalten.

Das Verfahren kann durch zusätzliche Maßnahmen, die eine gegenseitige Beeinflussung der POLMUX-Signale verringern, ergänzt werden. So können beispielsweise die modulierten Datensignale während der Übertragung um ein ganzzahliges Vielfaches einer Bitlänge gegeneinander verzögert werden, um eine Dekorrelation zwischen den POLMUX-Signalen herbeizuführen.

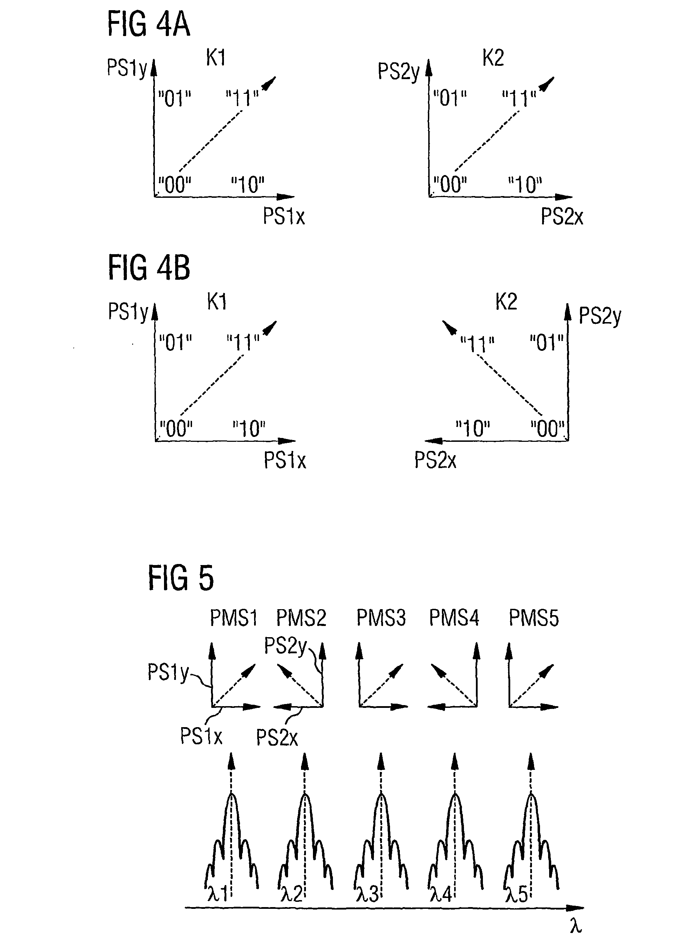

Anhand der Skizze in Fig. 4 soll der Unterschied zwischen herkömmlicher POLMUX-Übertragung und der erfindungsgemäßen Variante zur Vermeidung von Übersprechen aufgrund von XPolM verdeutlicht werden. Für zwei Kanäle K1 und K2 mit unterschiedlichen Wellenlängen sind für einen Zeitpunkt die resultierenden E-Feld-Vektoren für die möglichen Bit-Konstellationen der beiden Datensignale eines POLMUX-Signals dargestellt.

Figur 4a repräsentiert den Fall der herkömmlichen POLMUX-Übertragung, wobei jeweils zwei modulierte optische Datensignale PS1x und PS1y, die zueinander orthogonal polarisiert sind, in jeweils einem Kanal (hier K1 oder K2) bei der zugehörigen Wellenlänge übertragen werden. Die resultierende Polarisation des POLMUX-Signals hängt von dem übertragenen Bitmuster ab. Für die Fälle, dass nur ein Datensignal (eine logische 1), welches entweder horizontal oder vertikal polarisiert ist, übertragen wird (Bit-Kombinationen ,10' und ,01'), ist der E-Feld-Vektor der resultierenden Polarisation des POLMUX-Signals in x- bzw. in y-Richtung eingetragen. Werden als Datensignale zwei logische Einsen in beiden Ebenen gleichzeitig übertragen, so liegt der E-Feld-Vektor der resultierenden Polarisation des POLMUX-Signals unter 45° zur x-Richtung (Bit-Kombination ,11'). Durch das erfindungsgemäße Verfahren wird der Polarisationszustand der Resultierenden des POLMUX-Signals für jeden zweiten Kanal geändert, wie in Fig. 4b dargestellt ist. In jedem zweiten Kanal wird die Phase des ersten modulierten Datensignals PS2x um 180° verschoben, was anhand der E-Feld-Vektoren für den Kanal K2 zu erkennen ist. Für die Kombination '10'zeigt der E-Feld-Vektor in die negative x-Richtung. Wird in beiden Kanälen eine 1 übertragen, so liegt der E-Feld-Vektor der resultierenden Polarisation des POLMUX-Signals unter 135° zur x-Richtung, d.h. die resultierende Polarisation in Kanal K2 unterscheidet sich um 90° von der resultierenden Polarisation in Kanal K1. Um welche Art der Polarisation es sich dabei handelt ist für das erfindungsgemäße Verfahren unerheblich. Es gilt allgemein gleichermaßen für linear polarisierte oder zirkular bzw. elliptisch polarisierte optische Signale.

In Fig. 5 sind die Spektren der aus jeweils zwei Datensignalen zusammengefassten POLMUX-Signale für 5 Kanäle λ1-λ5 eines WDM-Systems mit zunehmender Wellenlänge λ skizziert (wobei die Bezeichnung λ1-λ5 gleichzeitig die unterschiedliche Wellenlängen der Trägersignale CW angibt). Oberhalb von jedem POLMUX-Signal PMS1 - PMS5 sind in Anlehnung an Fig. 1 die E-Feld-Vektoren der resultierenden Polarisationen der einzelnen POLMUX-Signale für die möglichen Bit-Kombinationen illustriert. Es ergeben sich im Falle von 11-Kombinationen von jeweils beiden Datensignalen PSnx und PSny (n = 1,2,3..) in jeweils benachbarten Kanälen zueinander orthogonale Polarisationen der resultierenden POLMUX-Signale. Eine nichtlineare Kopplung zwischen Kanälen mit gleichem Bitmuster wird aufgrund der unterschiedlichen Polarisationszustände der benachbarten Kanäle verringert. Da die Bitfolgen in den einzelnen Kanälen stets wechseln, kann die Störung aufgrund des Übersprechens nicht vollständig behoben werden. Trotzdem wird die Systemperformanz in einem WDM-System mit POLMUX und der erfindungsgemäßen so genannten verschachtelten Polarisation (engl. "interleaved polarization") immer verbessert, da das Übersprechen aufgrund von XPolM der Effekt ist, der die Systemperformanz am stärksten beeinträchtigt.

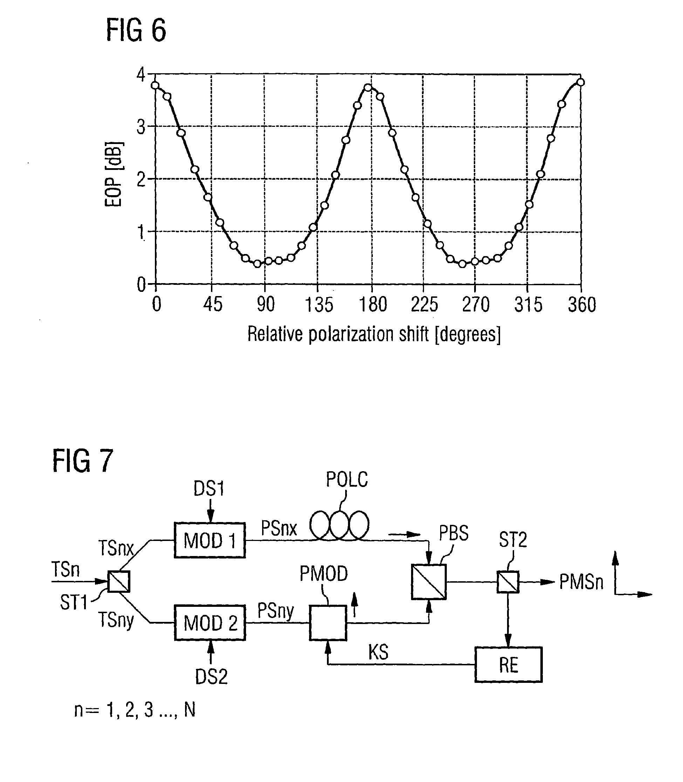

Die Verbesserung der Übertragungseigenschaften in WDM-Systemen mit POLMUX und verschachtelter Polarisation wurde sowohl durch Simulationen als auch experimentell bestätigt. In theoretischen Betrachtungen wurde ausgehend von der Manakov-Gleichung in einem WDM-System mit einer Vielzahl von Kanälen die Änderung der Polarisation eines optischen Signals in Propagationsrichtung berechnet. In Fig. 6 wird auf ein solches Simulationsergebnis Bezug genommen. In einem 2x10 Gbit/s WDM-System mit 5 Kanälen und POLMUX ist die "Eye Opening Penalty" (EOP) am Empfänger in y-Richtung aufgetragen. Sie ist definiert als zweimal die mittlere Intensität geteilt durch die maximale Augenöffnung eines Augendiagramms für 20 % der Bit-Periode und wird in dB angegeben. Qualitativ ist die EOP ein Maß für die Augenöffnung eines Augendiagramms. Bei einem Wert der EOP von 3 dB ist das Auge bis zur Hälfte geschlossen und der Anteil der Störeffekte ist sehr hoch. Auf der x-Achse von Fig. 3 ist der relative Polarisationsunterschied der resultierenden Polarisationen der POLMUX-Signale in jeweils benachbarten Kanälen angegeben. Pro Kanal wurden 7,8 dBm Leistung angenommen. Es sind deutlich die Minima der EOP für die x-Werte von 90° und 270° zu erkennen. An diesen Punkten stehen die E-Feld-Vektoren der resultierenden Polarisationen der POLMUX-Signale für jeweils benachbarte Kanäle annähernd orthogonal zueinander. Dies zeigt, dass für verschachtelte Polarisationen der POLMUX-Signale in benachbarten Kanälen die Öffnung eines Augendiagramms auf der Empfangsseite durch XPolM nur wenig beeinflusst wird und, dass die Störungen aufgrund von XPolM durch das erfindungsgemäße Verfahren maximal reduziert werden.

Grundsätzlich sind folgende Voraussetzungen zur technischen Realisierung des erfindungsgemäßen Verfahrens zu beachten: Zur Erzeugung eines POLMUX-Signals mit zwei Datensignalen ist eine einzelne Laserquelle zwingend, da nur so feste Phasendifferenzen zwischen den Datensignalen eingestellt werden können. Die Einstellung von exakten Polarisationszuständen zu Beginn der Übertragungsstrecke sollte mit großer Sorgfalt durchgeführt werden. Es ist wichtig, dass die Bezugsebenen der Polarisation für alle Kanäle gleich sind. Die Effizienz des Verfahrens wird davon abhängen, ob die 90°-Differenz der Polarisationen der Resultierenden der POLMUX-Signale in jeweils benachbarten Kanälen erhalten bleibt. Der Einsatz von polarisationserhaltenden Fasern oder Multiplexern ist daher vorteilhaft, ebenso das Vorhandensein von Regelkreisen und Kontrollmechanismen der Polarisationszustände. Die Verwendung von polarisationserhaltenden "arrayed waveguide gratings" (AWGs) zur Erzeugung von in ihrer Polarisation verschachtelten POLMUX-Signalen in einem WDM-System bringt den Vorteil mit sich, dass keine Kontrolleinheiten innerhalb der Multiplex-Anordnung notwendig sind. Auch kann die Anordnung leicht in eine bereits bestehende POLMUX-Übertragungsstrecke eingefügt werden. Zusätzlich müssen die in allen Kanälen übertragenen Bitfolgen zeitlich synchronisiert sein, um maximale Wechselwirkungszeiten zu erreichen.

Figur 7 zeigt das Prinzipschaltbild einer sendeseitigen POLMUX-Anordnung mit Regeleinrichtung des Polarisationszustands. Ein kontinuierliches optisches Tägersignal TSn (n = 1, 2, 3 ...) einer vorgegebenen Emissionswellenlänge eines Lasers wird einem Strahlteiler ST1 zugeführt, der es in zwei CW-Teilsignale TSnx und TSny gleicher Amplitude aufteilt, die als Trägersignale für die einzelnen Kanäle mit n = 1, 2, 3 ... dienen. Im Folgenden wird die Anordnung zur Erzeugung eines POLMUX-Signals PMSn für einen beliebigen Kanal n beschrieben. Das erste CW-Teilsignal/Trägersignal TSnx wird einem ersten Modulator MOD1 zugeführt, wo es mit einem ersten Datensignal DS1 amplitudenmoduliert wird. Das am Ausgang des Modulators MOD1 abgegebene amplitudenmodulierte optische Signal PSnx wird über ein Polarisationsstellglied POLC, der die Polarisation um 90° verstellt, einem Polarisationskombinierer PBS zugeführt. Das zweite CW-Teilsignal/Trägersignal TSny wird einem zweiten Modulator MOD2 zugeführt, wo es mit einem zweiten Datensignal DS2 amplitudenmoduliert wird. Das am Ausgang des Modulators abgegebene amplitudenmodulierte optische Datensignal PSny wird einem Phasenmodulator PMOD zugeführt, der von einer Regeleinrichtung RE gesteuert wird. Im Phasenmodulator PMOD kann eine Phasenverschiebung von 180° gegenüber dem optischen Datensignal PSnx eingestellt werden. Eine Phasenverschiebung von 180° bewirkt eine Polarisationsdrehung des resultierenden POLMUX-Signals von 90°. Das optische Datensignal PSny wird anschließend dem Polarisationskombinierer PBS zugeführt, der es mit dem optischen Datensignal PSnx zu einem Polarisationsmultiplex-Signal PMSn zusammengefasst. Das am Ausgang des Polarisationskombinierers abgegebene POLMUX-Signal PMSn wird einem Strahlteiler ST2 zugeführt, dessen erster Ausgang zur Übertragungsstrecke führt, während über den zweiten Ausgang ein Messsignal zu der Regeleinrichtung RE geleitet wird. Dort wird der Polarisationszustand der Resultierenden des POLMUX-Signals gemessen und ein Kontrollsignal KS erzeugt, welches dem Phasenmodulator PMOD zugeführt wird. Auf diese Weise wird die Phasenverschiebung zwischen den optischen Signalen PSnx und PSny exakt eingestellt.

Zur Realisierung des erfindungsgemäßen Verfahrens wird die angegebene Variante einer POLMUX-Sendeanordnung beispielsweise für alle geradzahligen Kanäle des WDM-Systems implementiert. Dann wird bei den ungeradzahligen Kanälen die Trägerphase des modulierten Datensignals PSnY am Phasenmodulator auf 0° gehalten. Die POLMUX-Signale der geradzahligen und ungeradzahligen Kanäle werden zur Datenübertragung mit polarisationserhaltenden Wellenleitergittern (engl. "arrayed waveguide gratings", abgekürzt AWG) zusammengefasst.

Die Einstellung der Polarisation und Phase der beiden optischen Signale eines POLMUX-Signals kann wahlweise auch vor der Datenmodulation erfolgen. Dazu wird das Trägersignal TS mittels eines Polarisationssplitters PBS in zwei zueinander orthogonal polarisierte Trägersignale TSnx und TSny gleicher Amplitude aufgeteilt. Diese Trägersignale werden jeweils unterschiedlichen Modulatoren zugeführt. Die Phaseneinstellung erfolgt im Anschluss hinter einem der Modulatoren.

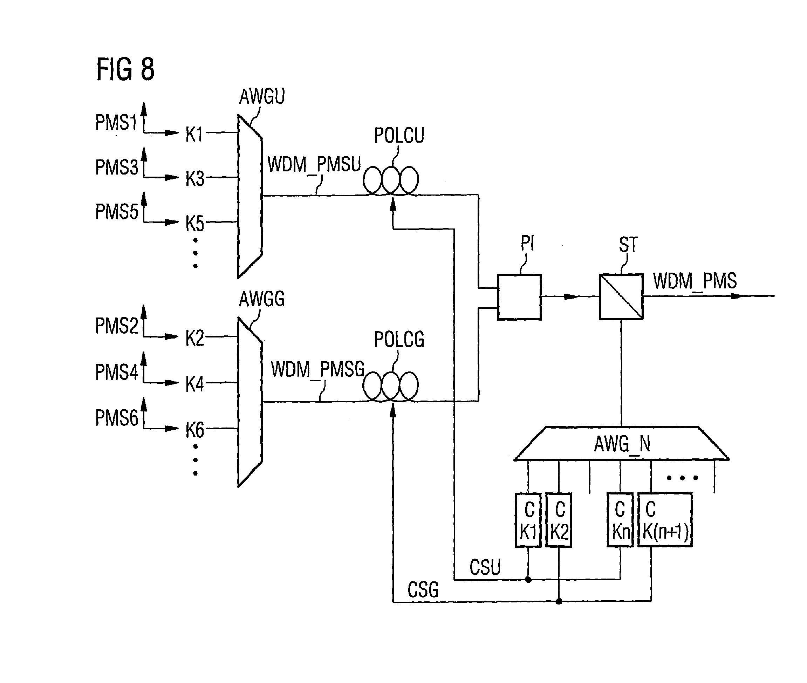

In Fig. 8 ist das Prinzipschaltbild einer Variante eines POLMUX-Multiplexers zur Realisierung des erfindungsgemäßen Verfahrens dargestellt. Die POLMUX-Signale PMS1, PMS3, PMS5... der ungeradzahligen Kanäle K1, K3, K5, ... welche jeweils aus zwei zueinander orthogonalen Datensignalen PSix und PSiy mit i ungeradzahlig bestehen, werden den Eingängen eines polarisationserhaltenden AWG AWGU zugeführt, wo sie zu einem ersten WDM-Signal WDM_PMSU zusammengefasst werden. Der Kanalabstand der einzelnen Kanäle betrage in diesem Beispiel 100 GHz. Der Ausgang von AWGU ist über eine polarisationserhaltende Faser und ein Polarisationsstellglied POLCU mit dem ersten Eingang eines Channel-Interleavers PI verbunden. Die POLMUX-Signale PMS2, PMS4, PMS6 ... der geradzahligen Kanäle K2, K4, K6... unterscheiden sich im Vergleich zu den POLMUX-Signalen der ungeradzahligen Kanäle dahingehend, dass das Trägersignal eines der beiden zueinander orthogonal polarisierten Datensignale um 180° gegenüber dem anderen phasenverschoben ist. Die POLMUX-Signale PMS2, PMS4, PMS6 ... werden den Eingängen eines polarisationserhaltenden AWG AWGG zugeführt, wo sie zu einem zweiten WDM-Signal WDM_PMSG zusammengefasst werden. Der Kanalabstand der einzelnen Kanäle betrage hier 100 GHz. Der Ausgang von AWGG ist über eine polarisationserhaltende Faser und ein Polarisationsstellglied POLCG mit dem zweiten Eingang eines Channel-Interleavers PI verbunden. Am Ausgang des Channel-Interleavers PI wird das WDM-POLMUX-Signal WDM_PMS abgegeben, das aus N POLMUX-Signalen mit zueinander verschachtelten Polarisationen besteht. Der Kanalabstand beträgt jetzt 50 GHz. Das WDM-POLMUX-Signal WDM_PMS wird an einem Strahlteiler ST in zwei Teilsignale aufgeteilt. Das erste Teilsignal wird der Übertragungsstrecke zugeführt, das zweite Teilsignal wird einem polarisationserhaltenden AWG AWG_N, welches als Demultiplexer fungiert, zugeführt. Am Ausgang des Demultiplexers AWG_N können die POLMUX-Signale kanalweise Polarisationskontrolleinrichtungen C(Kn) mit n = 1...N zugeführt werden, in denen je nach Bedarf der Polarisationszustand eines POLMUX-Signals bestimmt wird. Die Polarisationskontrolleinrichtungen C(Kn) der geradzahligen bzw. ungeradzahligen Kanäle sind mit den jeweiligen Polarisationsstellgliedern POLCG und POLCU verbunden. Mittels der Kontrollsignale CSG und CSU wird der Polarisationszustand der WDM-Signale WDM_PMSG und WDM_PMSU überprüft und geregelt.

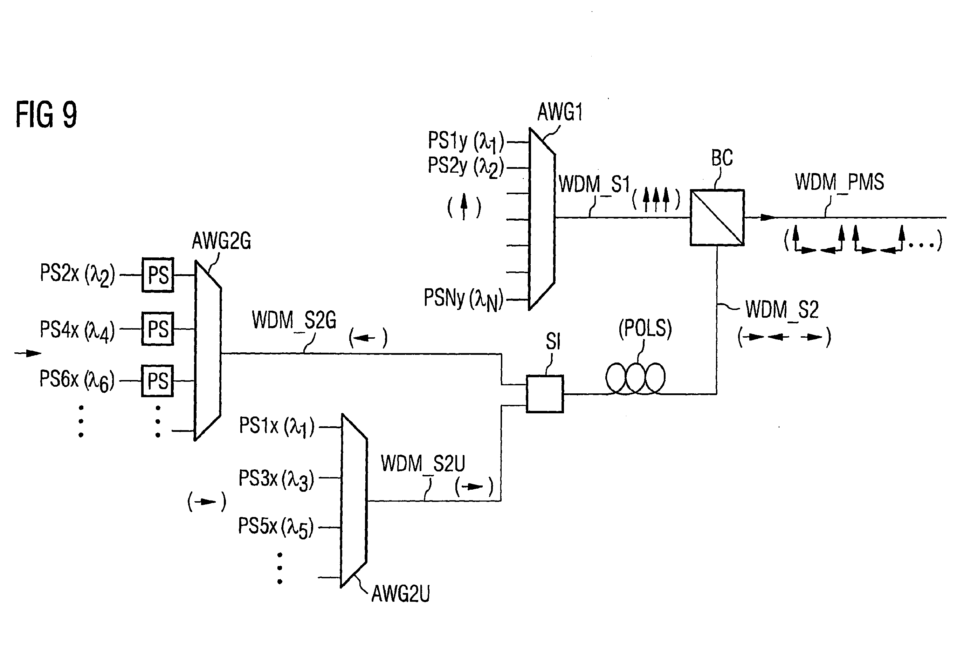

In Fig. 9 ist das Prinzipschaltbild einer zweiten Variante einer POLMUX-Sendeanordnung zur Realisierung des erfindungsgemäßen Verfahrens dargestellt. Einem ersten Eingang eines Strahlkombinierers BC wird ein erstes WDM-Signal WDM_S1 zugeführt, das mit einem Kanalabstand von 50 GHz aus modulierten optischen Datensignalen PS1y(λ₁), PS2y(λ₂), ... PSNy(λ_{N}) zusammengesetzt ist. Die modulierten optischen Datensignale PS2x(λ₂), PS4x(λ₄)), PS6x(λ₆) ... der geradzahligen Kanäle (der Kanalabstand beträgt beispielsweise 100 GHz) werden über Phasensteller PS einem Multiplexer AWG2G, der vorzugsweise aus einem polarisationserhaltenden AWG besteht, zugeführt. In den Phasenstellern wird die Phase der optischen Signale jeweils um 180° verschoben. (In der Zeichnung sind die Polarisationszustände der jeweiligen Signale in Klammern als E-Feldvektoren angegeben.) Das im Multiplexer AWG2G zusammengefasste Signal WDM_S2G wird anschließend einem Signal-Interleaver SI zugeführt. Die modulierten optischen Datensignale PS1x(λ₁), PS3x((λ₃)), PS5x(λ₅), ... der ungeradzahligen Kanäle (der Kanalabstand beträgt 100 GHz) werden direkt ohne Phasenverschiebung einem polarisationserhaltenden Multiplexer AWG2U zugeführt, wo sie zu einem Teilsignal WDM_S2U zusammengefasst und an den Ausgang abgegeben werden. Das erste Teilsignal WDM_S2U wird dem Signal-Interleaver SI zugeführt. Dabei kann es sich beispielsweise um ein periodisches Filter mit 50 GHz-Periode (einem 50 GHz-Interleaver) handeln. Im 50 GHz-Interleaver SI werden die beiden WDM-Teilsignale WDM_S2U und WDM_S2G zu einem zweiten WDM-Signal WDM_S2 mit 50 GHz Kanalabstand zusammengefasst. Das zweite WDM-Signal WDMS_S2 wird über einen Polarisationsversteller POLS einem ersten Eingang eines Strahlkombinierers BC zugeführt. Der Polarisationsversteller POLS bewirkt eine Polarisationsdrehung der WDM-Signale WDM_S2 von 90°. Alle Einzelsignale von WDM_S1 weisen eine Polarisation orthogonal zu den Signalen von WDM_S2 auf. Im Strahlkombinierer BC werden die zueinander orthogonal polarisierten WDM-Signale WDM_S1 und WDM_S2 zusammengefasst und an den Ausgang abgegeben. Die Polarisationsebenen sind natürlich vertauschbar. Ebenso kann der Polsteller wegfallen, wenn die zweiten Datensignale PSny orthogonal zu den ersten Datensignalen PSnx eingespeist werden, so wie es in Fig. 9 dargestellt ist.

Das derart erzeugte WDM-Ausgangssignal WDM_PMS besteht demnach pro Kanal aus einem POLMUX-Signal PMS, in dem zwei modulierte optische Signale zueinander orthogonal polarisiert sind. Dabei unterscheidet sich die resultierende Polarisation der POLMUX-Signale in den geradzahligen Kanälen gegenüber den ungeradzahligen Kanälen um 90°. Diese Sendeanordnung ist im Vergleich zu der in Fig. 8 dargestellten Variante mit weniger Aufwand zu realisieren.

## Patentansprüche

1. Verfahren zur optischen Übertragung von zu einem Wellenlängen-Multiplexsignal zusammengefassten Polarisations-Multiplexsignalen (PMS1, PMS2, ...), die jeweils durch Zusammenfassen eines ersten optischen amplitudenmodulierten Datensignals (PS1x, PS2x, ...) und eines eine hierzu orthogonale Polarisation aufweisenden zweiten optischen amplitudenmodulierten Datensignals (PS1y, PS2y,...) gebildet werden,
**dadurch gekennzeichnet,**
**dass** in einem ersten Kanal (K1) **mit einer ersten Wellenlänge (**λ**1)** ein erstes Polarisations-Multiplexsignal (PMS1) aus zwei **orthogonal polarisierten** amplitudenmodulierten Datensignalen (PS1x, PS1y) mit einer Phasenverschiebung von 90° zwischen ihren Trägersignalen (TS1x, TS1y) gebildet wird, wodurch bei gleichzeitiger Aussendung von beiden Datensignalen (PS1x, PS1y; ...) ein resultierendes erstes Polarisations-Multiplexsignal (PMS1) erzeugt wird, das zirkular polarisiert ist, und
**dass** in einem zweiten Kanal (K2) **mit einer zweiten Wellenlänge (**λ**2)** ein zweites Polarisations-Multiplexsignal (PMS2) ebenfalls aus zwei **orthogonal polarisierten amplituden**modulierten Datensignalen (PS2x, PS2y; ...) mit einer entgegengesetzten Phasenverschiebung von 90° zwischen ihren Trägersignalen (TS2x, TS2y) gebildet wird, wodurch bei gleichzeitiger Aussendung von beiden Datensignalen (PS2x, PS2y; ...) ein resultierendes zweites Polarisations-Multiplexsignal (PMS2) erzeugt wird, das entgegengesetzt zirkular polarisiert ist.

2. Verfahren nach Anspruch 1,
**dadurch gekennzeichnet,**
**dass** die amplitudenmodulierten Datensignale (PS2x, PS2y) des zweiten Polarisations-Multiplexsignals (PMS2) gegenüber den amplitudenmodulierten Datensignalen (PS1x, PS1y, ...) des ersten Polarisations-Multiplexsignals (PMS1) mit um 45° gegeneinander gedrehten Polarisationen übertragen werden.

3. Verfahren nach Anspruch 1 oder 2,
**dadurch gekennzeichnet,**
**dass alle** amplitudenmodulierten Datensignale (PS1x, PS1y; ...) von ungeradzahligen Polarisations-Multiplexsignalen (PMS1, ...) und **alle** amplitudenmodulierten Datensignale (PS2x, PS2y; ...) von geradzahligen Polarisations-Multiplexsignalen (PMS2, ...) jeweils gleich polarisiert sind und mit der gleichen Phasenverschiebung zwischen ihren Trägersignalen (TS1x, TS1y; T2x, T2y; ...) übertragen werden.

4. Verfahren nach Anspruch 3,
**dadurch gekennzeichnet,**
**dass** Polarisation und Phase der Trägersignale (TS1x, TS1y; TS2x, TS2y; ...) eingestellt werden und dass anschließend die so eingestellten Trägersignale (TS1x, TS1y; TS2x, TS2y; ...) amplitudenmoduliert und zu Polarisations-Multiplexsignalen (PMS1, PMS2, ...) zusammengefasst werden.

5. Verfahren zur optischen Übertragung von zu einem Wellenlängen-Multiplexsignal zusammengefassten Polarisations-Multiplexsignalen (PMS1, PMS2, ...) unterschiedlicher Wellenlänge, die jeweils durch Zusammenfassen eines ersten optischen amplitudenmodulierten Datensignals (PS1x, ...) und eines eine hierzu orthogonale Polarisation aufweisenden zweiten optischen amplitudenmodulierten Datensignals (PS1y, ...) gebildet werden,
**dadurch gekennzeichnet,**
**dass** in einem ersten Kanal (K1) **mit einer ersten Wellenlänge (**λ**1)** zwei **orthogonal polarisierte** amplitudenmodulierte optische Datensignale (PS1x PS1y) ohne Phasenunterschied zwischen ihren Trägersignalen (TS1x, TS1y) zu einem Polarisations-Multiplexsignal (PMS1) zusammengefasst werden, dass in einem zweiten Kanal (K2) **mit einer zweiten Wellenlänge (**λ**2)** zwei **orthogonal polarisierte** amplitudenmodulierte optische Datensignale (PS2x, PS2y), deren Trägersignale gegeneinander um 180° phasenverschoben sind, zu einem zweiten Polarisations-Multiplexsignal (PMS2) zusammengefasst werden, so dass sich bei gleichzeitiger Aussendung jeweils beider optischer Datensignale (PS1x, PS1y; PS2x, PS2y) eine resultierende Polarisation des zweiten Polarisations-Multiplexsignals (PMS2) um 90° von der resultierenden Polarisation des ersten Polarisations-Multiplexsignals (PMS1) unterscheidet.

6. Verfahren nach Anspruch 5,
**dadurch gekennzeichnet,**
**dass** die optischen Datensignale (PS1x PS1y ...) von ungeradzahligen Kanälen (K1,...) ohne Phasenunterschied ihrer Trägersignale (TS1x, TS1y;...) zu Polarisations-Multiplexsignalen (PMS1, ...) zusammengefasst werden, und dass in den geradzahligen Kanälen (K2, ...) jeweils Trägersignale (TS2x, ...) von ersten optischen Datensignalen (PS2x, ...) gegenüber Trägersignalen (TS2y, ...) von zweiten optischen Datensignalen (PS2y, ...) um 180° phasenverschoben und zu Polarisations-Multiplexsignalen (PMS2, ...) der ungeradzahligen Kanäle zusammengefasst werden.

7. Verfahren nach Anspruch 5 oder 6,
**dadurch gekennzeichnet,**
**dass** die Phasendifferenz zwischen den Trägersignalen (TS1x, TS1y) der optischen Datensignale (PS1x und PS1y) eines Kanals (K1) geregelt wird.

8. Verfahren nach Anspruch 5 oder 6,
**dadurch gekennzeichnet,**
**dass** zur Gewinnung des Kriteriums der Phasenregelung der Polarisationszustand der Resultierenden eines Polarisations-Multiplexsignales (PMS1, ...) gemessen und hieraus ein Regelsignal hergeleitet wird.

9. Verfahren nach Anspruch 5 oder 6,
**dadurch gekennzeichnet,**
**dass** bereits vor der Modulation der optischen Signale eines Polarisations-Multiplexsignals (PMS1, ...) die Polarisationszustände und Phasen der Trägersignale (TS1x, TS1y) eingestellt oder geregelt werden.

10. Verfahren nach Anspruch 5 oder 6,
**dadurch gekennzeichnet,**
**dass** die Polarisation der Resultierenden der Polarisations-Multiplexsignale (PMS1, PMS2, ...) während der Datenübertragung mindestens einmal kontrolliert und geregelt wird.

11. Verfahren nach Anspruch 6,
**dadurch gekennzeichnet,**
**dass** die gleiche Polarisation aufweisenden zweiten optischen Datensignale (PSny) aller Kanäle zu einem ersten WDM-Signal (WDM_S1) zusammengefasst und einem ersten Eingang eines Polarisationskombinierers (BC) zugeführt werden,
**dass** die gleiche Polarisation aufweisenden ersten optischen Datensignale (PSnx; n = 1, 3, ...) der ungeradzahligen Kanäle (K1, K3, ...) zu einem ersten WDM-Teilsignal (WDM_S2U) zusammengefasst werden und die um 180° in ihrer Phase verstellten gleiche Polarisation aufweisenden ersten optischen Datensignale (PSnx; n = 2, 4, ...) der geradzahligen Kanäle (K2, K4, ...) zu einem zweiten WDM-Teilsignal (WDM_S2G) zusammengefasst werden, wobei die Polarisation der zweiten optischen Datensignale (PS1y) gegenüber der Polarisation der ersten Datensignale (PS1x) um 90° unterschiedlich ist oder so eingestellt wird,
**dass** anschließend beide WDM-Teilsignale (WDM_S2U und WDM_S2G) zu einem zweiten WDM-Signal (WDM_S2) zusammengefasst einem zweiten Eingang eines Polarisationskombinierers (BC) zugeführt werden,
und **dass** dieser ein WDM-Ausgangssignal (WDM_PMS) bestehend aus den Polarisations-Multiplexsignalen (PMS1, PMS2, ...) abgibt, bei denen sich die resultierende Polarisation zwischen benachbarten Polarisations-Multiplexsignalen (PMS1, PMS2, ...) um 90° unterscheidet.

## Claims

1. Method for the optical transmission of polarization multiplex signals (PMS1, PMS2, ...) which are combined to form a wavelength multiplex signal and which are respectively formed by combining a first optical amplitude-modulated data signal (PS1x, PS2x, ...) and a second optical amplitude-modulated data signal (PS1y, PS2y, ...), which has orthogonal polarization with respect thereto,
**characterized**
**in that** a first polarization multiplex signal (PMS1) comprising two orthogonally polarized amplitude-modulated data signals (PS1x, PS1y) with a phase shift of 90° between their carrier signals (TS1x, TS1y) is formed in a first channel (K1) with a first wavelength (λ1), as a result of which simultaneous transmission of both data signals (PS1x, PS1y; ...) involves the production of a resulting first polarization multiplex signal (PMS1) which has circular polarization, and
**in that** a second polarization multiplex signal (PMS2) likewise comprising two orthogonally polarized amplitude-modulated data signals (PS2x, PS2y; ...) with an opposite phase shift of 90° between their carrier signals (TS2x, TS2y) is formed in a second channel (K2) with a second wavelength (λ2), as a result of which simultaneous transmission of both data signals (PS2x, PS2y; ...) involves the production of a resulting second polarization multiplex signal (PMS2) which has opposite circular polarization.

2. Method according to Claim 1,
**characterized**
**in that** the amplitude-modulated data signals (PS2x, PS2y) of the second polarization multiplex signal (PMS2) are transmitted with polarizations rotated through 45° with respect to one another in comparison with the amplitude-modulated data signals (PS1x, PS1y, ...) of the first polarization multiplex signal (PMS1).

3. Method according to Claim 1 or 2,
**characterized**
**in that** all the amplitude-modulated data signals (PS1x, PS1y; ...) of uneven-numbered polarization multiplex signals (PMS1, ...) and all the amplitude-modulated data signals (PS2x, PS2y; ...) of even-numbered polarization multiplex signals (PMS2, ...) respectively have the same polarization and are transmitted with the same phase shift between their carrier signals (TS1x, TS1y; T2x, T2y; ...).

4. Method according to Claim 3,
**characterized**
**in that** the polarization and phase of the carrier signals (TS1x, TS1y; TS2x, TS2y; ...) are set and in that subsequently the carrier signals (TS1x, TS1y; TS2x, TS2y; ...) set in this manner are amplitude-modulated and combined to form polarization multiplex signals (PMS1, PMS2, ...).

5. Method for the optical transmission of polarization multiplex signals (PMS1, PMS2, ...) of different wavelengths which are combined to form a wavelength multiplex signal and which are respectively formed by combining a first optical amplitude-modulated data signal (PS1x, ...) and a second optical amplitude-modulated data signal (PS1y, ...), which has orthogonal polarization with respect thereto,
**characterized**
**in that** two orthogonally polarized amplitude-modulated optical data signals (PS1x, PS1y) without a phase difference between their carrier signals (TS1x, TS1y) are combined to form a polarization multiplex signal (PMS1) in a first channel (K1) with a first wavelength (λ1),
**in that** two orthogonally polarized amplitude-modulated optical data signals (PS2x, PS2y), the carrier signals of which are phase-shifted through 180° with respect to one another, are combined to form a second polarization multiplex signal (PMS2) in a second channel (K2) with a second wavelength (λ2), so that simultaneous transmission of both respective optical data signals (PS1x, PS1y; PS2x, PS2y) involves a resulting polarization of the second polarization multiplex signal (PMS2) differing from the resulting polarization of the first polarization multiplex signal (PMS1) by 90°.

6. Method according to Claim 5,
**characterized**
**in that** the optical data signals (PS1x PS1y, ...) of uneven-numbered channels (K1, ...) without a phase difference in their carrier signals (TS1x, TS1y; ...) are combined to form polarization multiplex signals (PMS1, ...), and
**in that** carrier signals (TS2x, ...) of first optical data signals (PS2x, ...) are respectively phase-shifted through 180° with respect to carrier signals (TS2y, ...) of second optical data signals (PS2y, ...) in the even-numbered channels (K2, ...) and are combined to form polarization multiplex signals (PMS2, ...) of the uneven-numbered channels.

7. Method according to Claim 5 or 6,
**characterized**
**in that** the phase difference between the carrier signals (TS1x, TS1y) of the optical data signals (PS1x and PS1y) of a channel (K1) is regulated.

8. Method according to Claim 5 or 6,
**characterized**
**in that** in order to obtain the criterion for the phase regulation, the polarization state of the resultant for a polarization multiplex signal (PMS1, ...) is measured and a regulatory signal is derived therefrom.

9. Method according to Claim 5 or 6,
**characterized**
**in that** even before the modulation of the optical signals of a polarization multiplex signal (PMS1, ...), the polarization states and phases of the carrier signals (TS1x, TS1y) are set or regulated.

10. Method according to Claim 5 or 6,
**characterized**
**in that** the polarization of the resultants for the polarization multiplex signals (PMS1, PMS2, ...) is controlled and regulated at least once during the data transmission.

11. Method according to Claim 6,
**characterized**
**in that** the second optical data signals (PSny), having the same polarization, in all the channels are combined to form a first WDM signal (WDM_S1) and are supplied to a first input of a polarization combiner (BC),
**in that** the first optical data signals (PSnx; n = 1, 3, ...), having the same polarization, in the uneven-numbered channels (K1, K3, ...) are combined to form a first WDM signal element (WDM_S2U) and the first optical data signals (PSnx; n = 2, 4, ...), phase-shifted through 180° and having the same polarization, in the even-numbered channels (K2, K4, ...) are combined to form a second WDM signal element (WDM_S2G), wherein the polarization of the second optical data signals (PS1y) differs from the polarization of the first data signals (PS1x) by 90° or is set such
that subsequently both WDM signal elements (WDM_S2U and WDM_S2G) are supplied to a second input of a polarization combiner (BC) in a form combined to form a second WDM signal (WDM_S2),
and **in that** said polarization combiner outputs a WDM output signal (WDM_PMS) comprising the polarization multiplex signals (PMS1, PMS2, ...), for which the resultant polarization between adjacent polarization multiplex signals (PMS1. PMS2, ...) differs by 90°.

## Revendications

1. Procédé de transmission optique de signaux multiplexés en polarisation (PMS1, PMS2, ...) regroupés pour former un signal multiplexé en longueur d'onde, lesquels sont formés respectivement par regroupement d'un premier signal de données optique modulé en amplitude (PS1x, PS2x, ...) et d'un deuxième signal de données optique modulé en amplitude (PS1y, PS2y, ...) et présentant une polarisation orthogonale par rapport au premier, **caractérisé en ce que**, dans un premier canal (K1) avec une première longueur d'onde (λ1), un premier signal multiplexé en polarisation (PMS1) est formé par deux signaux de données (PS1x, PS1y) modulés en amplitude et polarisés orthogonalement avec un déphasage de 90° entre leurs signaux porteurs (TS1x, TS1y), un premier signal multiplexé en polarisation résultant (PMS1), lequel est polarisé circulairement, étant de ce fait produit à l'émission simultanée des deux signaux de données (PS1x, PS1y ; ...), et **en ce que**, dans un deuxième canal (K2) avec une deuxième longueur d'onde (λ2), un deuxième signal multiplexé en polarisation (PMS2) est également formé par deux signaux de données (PS2x, PS2y) modulés en amplitude et polarisés orthogonalement avec un déphasage de 90° entre leurs signaux porteurs (TS2x, TS2y), un deuxième signal multiplexé en polarisation résultant (PMS2), lequel est polarisé circulairement en sens inverse, étant de ce fait produit à l'émission simultanée des deux signaux de données (PS2x, PS2y ; ...).

2. Procédé selon la revendication 1, **caractérisé en ce que** les signaux de données modulés en amplitude (PS2x, PS2y) du deuxième signal multiplexé en polarisation (PMS2) sont transmis avec des polarisations ayant subi une rotation de 45° l'une par rapport à l'autre en comparaison avec les signaux de données modulés en amplitude (PS1x, PS1y, ...) du premier signal multiplexé en polarisation (PMS1).

3. Procédé selon la revendication 1 ou 2, **caractérisé en ce que** tous les signaux de données modulés en amplitude (PS1x, PS1y; ...) de signaux impairs multiplexés en polarisation (PMS1, ...) et tous les signaux de données modulés en amplitude (PS2x, PS2y ; ...) de signaux pairs multiplexés en polarisation (PMS2) sont respectivement pareillement polarisés et sont transmis avec le même déphasage entre leurs signaux porteurs (TS1x, TS1y ; T2x, T2y ; ...).

4. Procédé selon la revendication 3, **caractérisé en ce que** la polarisation et la phase des signaux porteurs (TS1x, TS1y ; TS2x, TS2y ; ...) sont calées et **en ce que** les signaux porteurs (TS1x, TS1y ; TS2x, TS2y ; ...) ainsi calés sont ensuite modulés en amplitude et regroupés pour former des signaux multiplexés en polarisation (PMS1, PMS2, ...).

5. Procédé de transmission optique de signaux multiplexés en polarisation (PMS1, PMS2, ...) de longueur d'onde différente regroupés pour former un signal multiplexé en longueur d'onde, lesquels sont formés respectivement par regroupement d'un premier signal de données optique modulé en amplitude (PS1x, ...) et d'un deuxième signal de données optique modulé en amplitude (PS1y, ...) et présentant une polarisation orthogonale par rapport au premier, **caractérisé en ce que**, dans un premier canal (K1) avec une première longueur d'onde (A1), deux signaux de données optiques (PS1x, PS1y) modulés en amplitude et polarisés orthogonalement, sans différence de phase entre leurs signaux porteurs (TS1x, TS1y), sont regroupés pour former un signal multiplexé en polarisation (PMS1) et **en ce que**, dans un deuxième canal (K2) avec une deuxième longueur d'onde (λ2), deux signaux de données optiques (PS2x, PS2y) modulés en amplitude et polarisés orthogonalement, et dont les signaux porteurs sont déphasés de 180° l'un par rapport à l'autre, sont regroupés pour former un deuxième signal multiplexé en polarisation (PMS2) de sorte que, à l'émission simultanée des deux signaux de données optiques (PS1x, PS1y ; PS2x, PS2y), une polarisation résultante du deuxième signal multiplexé en polarisation (PMS2) diffère de 90° de la polarisation résultante du premier signal multiplexé en polarisation (PMS1).

6. Procédé selon la revendication 5, **caractérisé en ce que** les signaux de données optiques (PS1x, PS1y ; ...) de canaux impairs (K1, ...) sans différence de phase entre leurs signaux porteurs (TS1x, TS1y ; ...) sont regroupés pour former des signaux multiplexés en polarisation (PMS1, ...) et **en ce que**, dans les canaux pairs (K2, ...), respectivement des signaux porteurs (TS2x, ...) de premiers signaux de données optiques (PS2x, ...) sont déphasés de 180° par rapport à des signaux porteurs (TS2y, ...) de deuxièmes signaux de données optiques (PS2y, ...) et sont regroupés pour former des signaux multiplexés en polarisation (PMS2, ...) des canaux impairs.

7. Procédé selon la revendication 5 ou 6, **caractérisé en ce que** la différence de phase entre les signaux porteurs (TS1x, TS1y) des signaux de données optiques (PS1x et PS1y) d'un canal (K1) subit un réglage.

8. Procédé selon la revendication 5 ou 6, **caractérisé en ce que**, pour obtenir le critère du réglage de phase, l'état de polarisation de la résultante d'un signal multiplexé en polarisation (PMS1, ...) est mesuré et un signal de réglage en est dérivé.

9. Procédé selon la revendication 5 ou 6, **caractérisé en ce que**, dès avant la modulation des signaux optiques d'un signal multiplexé en polarisation (PMS1, ...), les états de polarisation et phases des signaux porteurs (TS1x, TS1y) sont calés ou réglés.

10. Procédé selon la revendication 5 ou 6, **caractérisé en ce que** la polarisation de la résultante des signaux multiplexés en polarisation (PMS1, PMS2, ...) est contrôlée et réglée au moins une fois pendant la transmission de données.

11. Procédé selon la revendication 6, **caractérisé en ce que** les deuxièmes signaux de données optiques (PSny) de même polarisation de tous les canaux sont regroupés pour former un premier signal WDM (WDM_S1) et envoyés sur une première entrée d'un combineur de polarisation (BC), **en ce que** les premiers signaux de données optiques (PSnx ; n = 1, 3, ...) de même polarisation des canaux impairs (K1, K3, ...) sont regroupés pour former un premier signal partiel WDM (WDM_S2U) et les premiers signaux de données optiques (PSnx ; n = 2, 4, ...) de même polarisation et déphasés de 180° des canaux pairs (K2, K4, ...) sont regroupés pour former un deuxième signal partiel WDM (WDM_S2G), la polarisation des deuxièmes signaux de données optiques (PS1y) étant différente de 90° par rapport à la polarisation des premiers signaux de données (PS1x) ou étant calée de manière telle que les deux signaux partiels WDM (WDM_S2U et WDM_S2G), regroupés pour former un deuxième signal WDM (WDM_S2) sont ensuite envoyés sur une deuxième entrée d'un combineur de polarisation (BC), et **en ce que** celui-ci délivre un signal de sortie WDM (WDM_PMS) formé par les signaux multiplexés en polarisation (PMS1, PMS2, ...) qui sont tels que la polarisation résultante entre des signaux voisins multiplexés en polarisation (PMS1, PMS2, ...) diffère de 90°.
